# EUROPEAN PATENT SPECIFICATION

(11) **EP 3 726 672 B1**
(45) Date of publication and mention of the grant of the patent: **11.02.2026**
(21) Application number: 18889250.9
(22) Date of filing: 22.11.2018
(51) Int. Cl.: H02B 13/00, H01R 13/53, H01R 25/16

(54) **BUSBAR CONNECTION APPARATUS**
SAMMELSCHIENENVERBINDUNGSVORRICHTUNG
APPAREIL DE CONNEXION DE BARRES OMNIBUS

(30) Priority: 15.12.2017 CN 201711352008
(43) Date of publication of application: 21.10.2020
(73) Proprietor: ABB Schweiz AG, 5400 Baden (CH)
(72) Inventor: YANG, Changzhou, Xiamen, Fujian 361006 (CN); CHEN, Xingjie, Xiamen, Fujian 361000 (CN); HUANG, Liqun, Xiamen, Fujian 361006 (CN)
(74) Representative: Zimmermann & Partner Patentanwälte mbB
(86) International application number: PCT/CN2018/117016
(87) International publication number: WO 2019/114518

(56) References cited:
- EP-A1- 0 645 782
- EP-A2- 0 199 891
- CN-A- 101 578 741
- CN-U- 202 817 510
- CN-U- 205 178 279
- CN-U- 205 583 176
- CN-Y- 201 252 231
- JP-A- H1 070 817
- JP-U- S58 103 509
- US-A1- 2006 125 464

## Description

### CROSS-REFERENCES TO RELATED APPLICATIONS

### FIELD

The present disclosure generally relates to the field of switch devices, and more specifically to a busbar connection device, a busbar bushing and a method of manufacturing the same.

### BACKGROUND

Gas-insulated switch devices have long been used in the field of high-voltage and ultra-high-voltage power distribution. These devices employ SF6 gas, N2 gas, or a mixed gas as the insulation medium of the switch devices. They seal elements such as a busbar, a circuit breaker, and an isolation switch in a cabinet in a centralized manner. As viewed from the current use situations, the gas-insulated switch devices have advantages such as a compact structure, small occupation area, high reliability, flexible configuration, convenient installation, strong security, strong environmental adaptability, and small maintenance workload.

A manner of applying the gas-insulated switch device in the prior art lies in that a plurality of switch cabinets are arranged adjacent to one another and side by side, and are connected in series at least through a busbar. During the maintenance of the switch cabinets, the splicing method between the cabinets, the design of the insulation bushing and the control of the installation quality have always been issues considered by operators. For example, when one of the switch cabinets is being maintained, this will involve issues about detaching and installing the switch cabinet. How to draw out one switch cabinet from a plurality of switch cabinets without destroying the tightness of the switch cabinet with other switch cabinets has always been a core issue that operators expect to solve.

At present, a more universal solution is to provide a connection conductor between the two switch cabinets to realize the electrical connection of the exposed busbars of the two switch cabinets, and meanwhile surround the connection conductor with a connection conductor bushing made of a flexible insulating material such as silicone so that the connection conductor and the exposed busbars do not contact the external environment. Similar structures are described in both patent documents CN 201252231 and CN 1736010. The installation process thereof is mainly as follows: while clamping the bushing on the cabinet body on one side and pressing the bushing in the direction of the busbar, interconnecting the connection conductor with the two busbars, and releasing the bushing and clamping it on the cabinet body on the other side after completion of the interconnection operation. CN 205 583 176 U relates to the technical field of electric power and refers to the bus tie of a kind of labyrinth type insulation system. CN 201 252 231 Y relates to an insulating part in the cabinet type Cubicle Gas-insulated Switchgear, in particular to a kind of bus connector gum cover. US 2006/125464 A1 relates to a coupling sleeve for a bus bar connection as well as to a gas-insulated switchboard system which incorporates such a connecting sleeve.

However, although these solutions partially solve the problem about how to join cabinets, there are still many aspects to be improved. For example, since a plurality of accessories are needed upon mounting and fixing the connection conductor bushing, the installing process is complicated and time consuming. Furthermore, the connection conductor bushing occupies the space of the busbar compartment so that the size of the switch cabinet is larger. In addition, since the connection conductor bushing is firmly mounted between two cabinets, the connection conductor bushing is compressed in the direction of the busbar, and its shape will cause an uneven electric field between the two cabinets.

### SUMMARY

Embodiments of the present disclosure provide a busbar connection device.

According to the invention, a busbar connection device according to claim 1 is provided.

In some embodiments, the gap has a cylindrical shape and is arranged around the first busbar, and a length of the gap is at least three times the thickness.

In some embodiments, the busbar connection device may further comprise a pressing member configured to press the connection conductor bushing on the connection conductor in a direction substantially perpendicular to the axial direction, and seal the connection conductor.

In some embodiments, the connection conductor is a flexible connection conductor.

In some embodiments, the busbar connection device may further comprise a fastener adapted to fix the connection conductor in a manner that the connection conductor is conductively connected with the first busbar and the second busbar.

In some embodiments, the second busbar bushing may have the same structure as the first busbar bushing.

### BRIEF DESCRIPTION OF THE DRAWINGS

The above-mentioned object and other objects, features, and advantages of the present disclosure will become more apparent by describing the exemplary embodiments of the present disclosure in more detail with reference to the figures, where the same reference numerals generally denote the same components in the exemplary embodiments of the present disclosure.
FIG. 1 illustrates a cross-sectional view of a busbar connection device according to an embodiment of the invention;
FIG 2A and FIG. 2B respectively illustrate a cross-sectional view and a perspective view of a busbar bushing included in the busbar connection device of FIG. 1 according to an embodiment of the invention;
FIG. 3 illustrates a cross-sectional view of a busbar connection device according to another embodiment not part of the invention;
FIG. 4 illustrates a cross-sectional view of a busbar bushing included in the busbar connection device of FIG. 3;
FIG. 5 illustrates a cross-sectional view of a busbar connection device according to a further embodiment not part of the invention;
FIG. 6 illustrates a cross-sectional view of a busbar bushing included in the busbar connection device of FIG. 5; and
FIG. 7 illustrates a perspective view of a flexible connection conductor according to an embodiment of the present disclosure.

### DETAILED DESCRIPTION OF EMBODIMENTS

Preferred embodiments of the present disclosure will be described as follows in greater detail with reference to the drawings. Although preferred embodiments of the present disclosure are illustrated in the drawings, it is to be understood that the present disclosure described herein may be implemented in various manners, not limited to the embodiments illustrated herein. Rather, these embodiments are provided to make the present disclosure described herein clearer and more complete and convey the scope of the present disclosure described herein completely to those skilled in the art.

As used herein, the term "comprises" and its variants are to be read as open-ended terms that mean "comprises, but is not limited to." The term "or" is to be read as "and/or" unless the context clearly indicates otherwise. The term "based on" is to be read as "based at least in part on." The term "one example implementation" and "an example implementation" are to be read as "at least one example implementation." The term "another implementation" is to be read as "at least one other implementation." Terms "a first", "a second" and others may denote different or identical objects. The following text may also contain other explicit or implicit definitions.

In general, a bus connection device is proposed here. The busbar connection device comprises two busbar bushings, each of which is adapted to sealingly surround at least a portion of a busbar exposed from a corresponding switch cabinet. In addition, the busbar connection device further comprises one or more connection conductors which are located between the two busbar bushings and electrically connect the two busbars exposed from the corresponding switch cabinets. In addition, the busbar connection device further comprises one or more connection conductor bushings adapted to sealingly surround the connection conductors. The key point of the present disclosure is that a gap extending in the axial direction of the busbar is reserved in the busbar bushing, and the gap is suitable for receiving the connection conductor bushing.

The above-mentioned busbar connection device and the busbar bushing therein will be described in detail with reference to the figures and a plurality of corresponding embodiments.

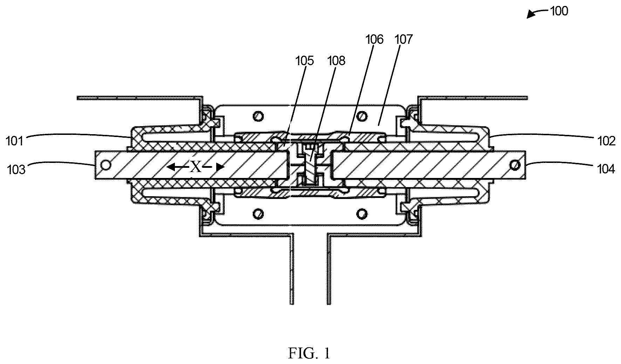

FIG. 1 illustrates a cross-sectional view of a busbar connection device according to an embodiment of the present disclosure. As shown in FIG. 1, the busbar connection device 100 may include a busbar bushing 101, a busbar bushing 102, a connection conductor 105, and a connection conductor bushing 106. The busbar bushing 101 sealingly surrounds a portion or all of the busbar 103 exposed from the switch cabinet, and correspondingly the busbar bushing 102 sealingly surrounds a portion or all of the busbar 104 exposed from another switch cabinet. To realize the electrical interconnection of the busbars of the two cabinets, the connection conductor 105 is provided between the busbar bushing 101 and the busbar bushing 102, electrically connecting the busbar 103 with the busbar 104. In addition, a bushing surrounding the connection conductor 105 needs to be provided to prevent the connection conductor 105 from being exposed to the external environment. According to the invention, as shown in FIG. 1, the connection conductor bushing 106 is provided to sealingly surround the connection conductor 105.

As stated above, the traditional busbar bushing installation process is: while clamping the connection conductor bushing on the cabinet on one side and pressing the bushing in the direction of the busbar, interconnecting the connection conductor with the two busbars, and after the interconnection, releasing the connection conductor bushing and clamping it on the cabinet on the other side.

In contrast, a gap extending in the axial direction of the busbar is reserved in the busbar bushings 101 and 102. The connection conductor bushing 106 is a one-piece structure, and adapted to move in a busbar extension direction (e.g., the X direction of FIG. 1), so that the connection conductor bushing 106 can be moved in the X direction into the gap reserved in the busbar bushings 101 and 102 during the installation or removal of the connection conductor 105.

When an operator needs to disconnect the busbar connection of two switch cabinets, he may first move the connection conductor bushing 106 in the X direction into the gap, so that the connection conductor 105 can be easily exposed for the operator to operate. After completion of the operation on the connection conductor 105, the operator may further move the connection conductor bushing 106 along the busbar extension direction (e.g., the X direction of FIG. 1) to sealingly surround the connection conductor 105. Therefore, the busbar connection device 100 supports a simpler and more efficient installation and removal process.

In addition, in some embodiments, the busbar connection device 100 may further include a pressing member 107. The pressing member 107 is configured to press the connection conductor bushing 106 on the busbar bushing 101 in a direction substantially perpendicular to the X direction, and seal the connection conductor 105 to form a sealed insulation space. With the pressing member 107 being added, the connection conductor bushing 106 may be fixed more safely, and the connection conductor bushing 106 can be prevented from aging.

In this way, the lateral space of the busbar compartment is fully utilized, and because the connection conductor bushing 106 only takes up a small longitudinal space (its movement is also a transverse movement in the X direction), the space of the busbar compartment is saved, so that the switch cabinet may be designed to have a smaller volume.

In addition, the busbar connection device 100 in this embodiment only comprises the busbar bushings, the connection conductor, and the connection conductor bushing, and does not need other extra accessories to install and fix the connection conductor bushing. The structure is simpler and the installation process is more time and effort-saving. Moreover, as shown in FIG. 1, the connection conductor bushing 106 is arranged to more uniformly surround the connection conductor 105 (or further surround a portion of the bus conductor bushings 101 and 102 and/or a portion of the busbars 103 and 104), so the electric field at the connection is relatively uniform, which is conducive to extending the service life of the cabinet.

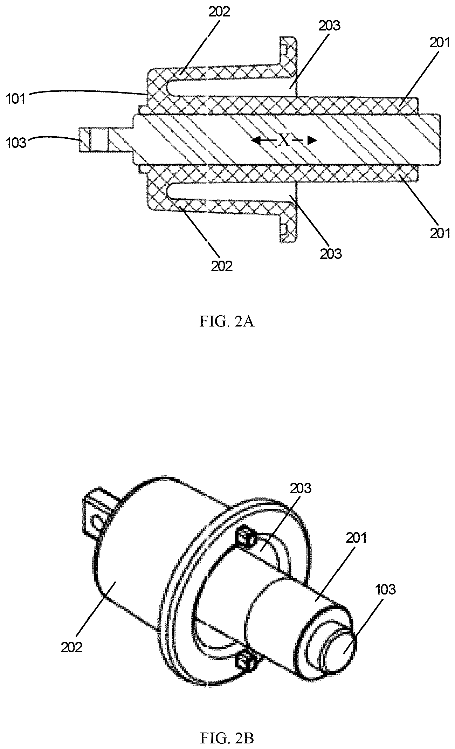

An example structure of the busbar bushing 101 will be described below with reference to FIG. 2A and FIG. 2B. As shown in FIG. 2A and FIG. 2B, the busbar bushing 101 comprises a first portion 201 and a second portion 202. The first portion 201 is adapted to sealingly surround at least a portion of the busbar 103. The second portion 202 is connected to the first portion 201 and forms a gap 203 extending in the X direction with the first portion 201. The gap 203 is adapted to receive the connection conductor bushing 106. For example, the gap 203 has a cylindrical shape and is arranged around the busbar 103, and the length of the gap 203 is at least three times the thickness, so as to adapt the thin connection conductor bushing 106. The complicated removal work of the connection conductor bushing 106 is avoided by creating the gap 203 in the busbar bushing 101.

In some embodiments, as shown in FIG. 1, the busbar bushing 102 may have the same structure as the busbar bushing 101. Certainly, since the gap extending in the X direction needs to be reserved in only one busbar bushing, the busbar bushing 102 may also have a traditional structure different from the busbar bushing 101, thereby saving the cost of upgrade.

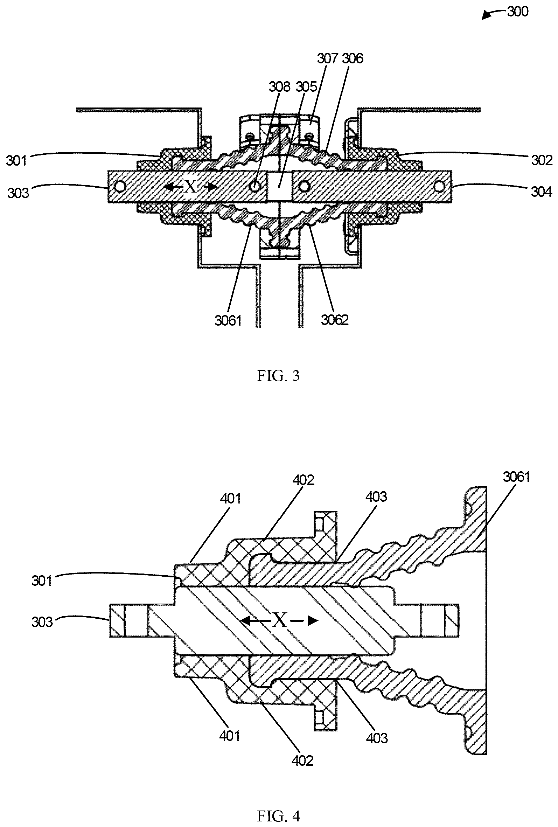

FIG. 3 illustrates a cross-sectional view of a busbar connection device according to another embodiment not part of the invention. As shown, the busbar connection device 300 may include a busbar bushing 301, a busbar bushing 302, a connection conductor 305, and a connection conductor bushing 306. These components substantially correspond to the components in FIG. 1, so the connection relationship thereof is not described in detail. In addition, as described above, a bushing surrounding the connection conductor 305 needs to be provided to prevent the connection conductor 305 from being exposed to the external environment. For example, as shown in FIG. 3, the connection conductor bushing 306 is provided to sealingly surround the connection conductor 305.

In addition, a gap extending in the axial direction of the busbar is reserved in the busbar bushings 301, 302. In some embodiments, the connection conductor bushing 306 may include a first sub-bushing 3061 and a second sub-bushing 3062. The first sub-bushing 3061 is integrally molded with the busbar bushing 301, and the second sub-bushing 3062 is integrally molded with the busbar bushing 302, and adapted to be disposed opposite the first sub-bushing 3061 after the connection conductor 105 is installed.

For example, when an operator needs to disconnect the busbar connection of two switch cabinets, he/she may first compress the first sub-bushing 3061 of the connection conductor bushing 306 in the X direction toward the busbar bushing 301, so that the connection conductor 305 can be easily exposed for the operator to operate. After completion of the operation on the connection conductor 305, the operator may restore the first sub-bushing 3061 to engage with the second sub-bushing 3062 to seal the connection conductor 305, thereby simply completing the entire process of installation or removal. Certainly, the first sub-bushing 3061 and the second sub-bushing 3062 may also be compressed simultaneously to release the space for operating the connection conductor 305.

In addition, in some embodiments, the busbar connection device 300 may further include a pressing member 307. The pressing member 307 may be configured to press in the axial direction and at least seal a contact portion of the first sub-bushing 3061 and the second sub-bushing 3062. With the pressing member 307 being further added, the connection conductor bushing 306 may be fixed more safely, and the connection conductor bushing 306 can be prevented from aging.

An advantage of the present embodiment lies in that the exposed position is reduced through the integral molding technology (due to the thermal contraction effect in the epoxy resin mold, the silicone bushing may be well connected with the bus conductor as well as the busbar bushing having epoxy resin). That is, it is possible that the conduction conductor 305 is exposed only at the contact portion of the first sub-bushing 3061 and the second sub-bushing 3062 according to the present embodiment, whereas it is possible that the connection conductor is exposed on both sides of the connection conductor bushing in the conventional structure. In addition, the busbar connection device 300 in the present embodiment only comprises the busbar bushings, the connection conductor, and the connection conductor bushing, and does not need other extra accessories to install and fix the connection conductor bushing. The structure is simpler and the installation process is more time and effort-saving.

The specific structure of the busbar bushing 301 will be described in detail below with reference to FIG. 4. As shown in FIG. 4, the busbar bushing 301 comprises a first portion 401 and a second portion 402. The first portion 401 is adapted to sealingly surround at least a portion of the busbar 303. The second portion 402 is connected to the first portion 401 and forms a gap 403 extending in the X direction with the first portion 401. Furthermore, the gap 403 is already used to receive the first sub-bushing 3061 of the connection conductor bushing 306. The complicated removal work of the connection conductor bushing 306 is avoided by creating the gap 403 in the busbar bushing 301, and using the gap 403 to integrally mold the first sub-bushing 3061 with the first portion 401 of the busbar bushing.

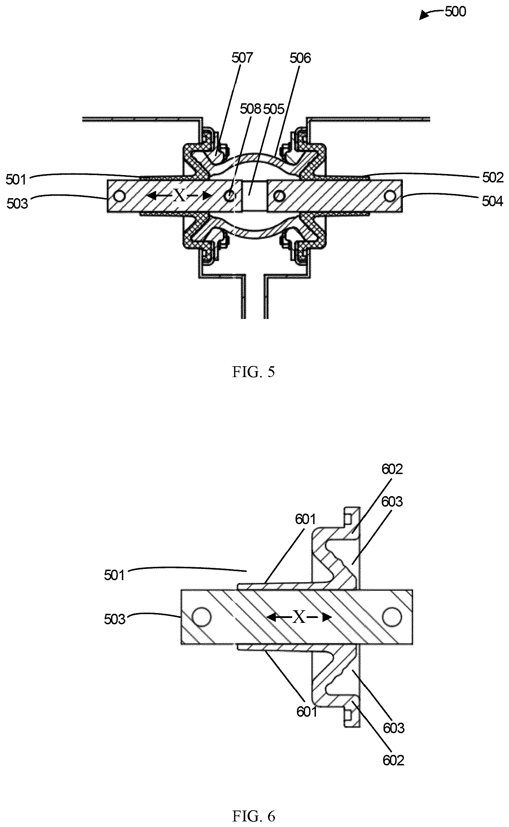

FIG. 5 illustrates a cross-sectional view of a busbar connection device according to a further embodiment not part of the invention. As shown in FIG. 5, the busbar connection device 500 may include a busbar bushing 501, a busbar bushing 502, a connection conductor 505, and a connection conductor bushing 506. The busbar bushing 501 sealingly surrounds a portion or all of the busbar 503 exposed from the switch cabinet, and correspondingly the busbar bushing 502 sealingly surrounds a portion or all of the busbar 504 exposed from another switch cabinet. To realize the electrical interconnection of the busbars of the two cabinets, the connection conductor 505 is provided between the busbar bushing 501 and the busbar bushing 502, and electrically connects the busbar 503 with the busbar 504. In addition, as stated above, a bushing surrounding the connection conductor 505 needs to be provided to prevent the connection conductor 505 from being exposed to the external environment. For example, as shown in FIG. 5, the connection conductor bushing 506 is provided to sealingly surround the connection conductor 505.

In addition, a tapered gap is reserved in each of the busbar bushings 501 and 502, so that the connection conductor bushing 506 may be directly stuck and fixed in each of the busbar bushings 501 and 502. When an operator needs to disconnect the busbar connection of the two switch cabinets, he/she may first compress the connection conductor bushing 506 toward the busbar bushing 501 in the X direction (or even take out the connection conductor bushing 506 by compression), so that the connection conductor 505 can be easily exposed for the operator to operate. After completion of the operation on the connection conductor 305, the operator may place the connection conductor bushing 506 again to seal the connection conductor 505, thereby simply completing the entire process of installation or removal.

In addition, in some embodiments, the busbar connection device 500 may further include a pressing member 507. The pressing member 507 may be configured to press in the axial direction and seal the connection conductor bushing 506. With the pressing member 507 being added, the connection conductor bushing 506 may be fixed more safely.

An advantage of the present embodiment lies in that since the tapered gap is reserved in each of the busbar bushings 501 and 502 and the connection conductor bushing 506 may be directly stuck and fixed in each of the busbar bushings 501 and 502, the busbar connection device 500 in the present embodiment only comprises the busbar bushings, the connection conductor, and the connection conductor bushing, and does not need other extra accessories to install and fix the connection conductor bushing. The structure is simpler and the installation process is more time and effort-saving.

The specific structure of the busbar bushing 501 will be described in detail below with reference to FIG. 6. As shown in FIG. 6, the busbar bushing 501 comprises a first portion 601 and a second portion 602. The first portion 601 is adapted to sealingly surround at least a portion of the busbar 503. The second portion 602 is connected to the first portion 601 and forms a gap 603 with the first portion 601. Furthermore, the gap 603 is already used to receive the connection conductor bushing 506. The complicated removal work of the connection conductor bushing 506 is avoided by creating the gap 603 in the busbar bushing 501.

In addition, as shown in FIG. 1, FIG. 3 and FIG. 5, in some embodiments, the busbar connection devices 100, 300, and 500 may further include: fasteners 108, 308, 508 adapted to fix the connection conductors 105, 305 505 in a manner that the connection conductors 105, 305, 505 are conductively connected with the busbars 103, 303, 503 and the busbars 104, 304, 504. For example, the fasteners may be bolts or other members depending on the specific shapes of the connection conductor and the busbars.

In some embodiments, the connection conductors 105, 305, 505 may be flexible connection conductors, so as to increase adjustment margins in the horizontal and vertical directions to adapt to different in-situ environments and product tolerance.

In some embodiments, each busbar bushing and connection conductor bushing may have materials such as silicone resin, EPDM etc., and may be coated with a conductive coating, so the busbar connection device 100, 300, 500 may meet insulation requirements better.

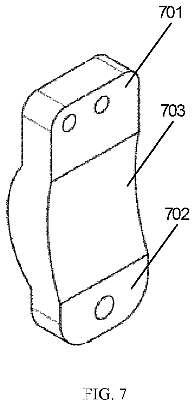

In addition, FIG. 7 shows a perspective view of a flexible connection conductor according to an embodiment of the present disclosure. As shown in FIG. 7, the flexible connection conductor comprises a first head portion 701, a second head portion 702, and a bent portion 703 connected between the first head portion 701 and the second head portion 702. When the flexible connection conductor is installed, the first head portion 701 may be connected to for example the busbars 103, 303, 503, and the second head portion 702 may be connected to for example the busbars 104, 304, 504. The flexible connection conductor may be made of various metal materials (preferably copper), and its thickness may be less than 1 mm, preferably less than 0.5 mm, more preferably less than 0.1 mm, and most preferably less than 0.05 mm. According to the magnitude of the current flowing through the busbar, a plurality of (for example, 50 to 150, preferably 100) flexible connection conductors may be superimposed and used. Preferably, the plurality of flexible connection conductors may be superimposed together by large current plus heat press welding. By implementing the above-mentioned connection conductor, it is possible to simplify the installation operation and absorb errors caused by the foundation, equipment tolerances, and so on. At the same time, the above-mentioned flexible connection conductor may further absorb noise and vibration generated during the operation of high-current electrical equipment.

In summary, the features and advantages of the present disclosure have been shown in detail by discussing the above embodiments.

## Claims

1. A busbar connection device (100, 300), comprising:
a first busbar bushing (101, 301) adapted to sealingly surround at least a portion of a first busbar (103, 303);
a second busbar bushing (102, 302) adapted to sealingly surround at least a portion of a second busbar (104, 304);
a connection conductor (105, 305) located between the first busbar bushing (101, 301) and the second busbar bushing (102, 302) and electrically connecting the first busbar (103, 303) with the second busbar (104, 304); and
a connection conductor bushing (106, 306) adapted to sealingly surround the connection conductor (105, 305), wherein
the connection conductor bushing (106) is a one-piece structure; and wherein
at least the first busbar bushing (101, 301) comprises:
a first portion (201, 401) adapted to sealingly surround at least a portion of the first busbar (103, 303); and
a second portion (202, 402) connected to the first portion (201, 401) and forming a gap (203, 403) extending in an axial direction (X) of the first busbar (103, 303) with the first portion (201, 401), the gap (203, 403) being adapted to receive the connection conductor bushing (106, 306);
**characterized in that** the connection conductor bushing (106) is adapted to move in the axial direction (X) so that the connection conductor bushing (106) can be moved into the gap (203) in the axial direction (X) during installation or removal of the connection conductor (105) so that the connection conductor can be easily exposed for the operator to operate.

2. The busbar connection device (100) according to claim 1, wherein the gap (203) has a cylindrical shape and is arranged around the first busbar (103), and a length of the gap (203) is at least three times the thickness.

3. The busbar connection device (100) according to claim 1, further comprising:
a pressing member (107, 307) configured to press the connection conductor bushing (106, 306, 506) on the busbar bushing (101) in a direction substantially perpendicular to the axial direction (X), and seal the connection conductor (105).

4. The busbar connection device (100, 300) according to claim 1, wherein the connection conductor (105, 305) is a flexible connection conductor.

5. The busbar connection device (100, 300) according to claim 1, further comprising:
a fastener (108, 308) adapted to fix the connection conductor (105, 305) in a manner that the connection conductor (105, 305) is conductively connected with the first busbar (103, 303) and the second busbar (104, 304).

6. The busbar connection device according to any of claims 1-5, wherein the second busbar bushing has the same structure as the first busbar bushing.

## Patentansprüche

1. Sammelschienenverbindungsvorrichtung (100, 300), umfassend:
eine erste Sammelschienendurchführung (101, 301), die dazu ausgelegt ist, zumindest einen Abschnitt einer ersten Sammelschiene (103, 303) abdichtend zu umgeben;
eine zweite Sammelschienendurchführung (102, 302), die dazu ausgelegt ist, zumindest einen Abschnitt einer zweiten Sammelschiene (104, 304) abdichtend zu umgeben;
einen Verbindungsleiter (105, 305), der sich zwischen der ersten Sammelschienendurchführung (101, 301) und der zweiten Sammelschienendurchführung (102, 302) befindet und die erste Sammelschiene (103, 303) mit der zweiten Sammelschiene (104, 304) elektrisch verbindet; und
eine Verbindungsleiterdurchführung (106, 306), die so ausgelegt ist, dass sie den Verbindungsleiter (105, 305) abdichtend umgibt, wobei
die Verbindungsleiterdurchführung (106) eine einteilige Struktur ist; und wobei
zumindest die erste Sammelschienendurchführung (101, 301) umfasst:
einen ersten Abschnitt (201, 401), der dazu ausgelegt ist, zumindest einen Abschnitt der ersten Sammelschiene (103, 303) abdichtend zu umgeben; und
einen zweiten Abschnitt (202, 402), der mit dem ersten Abschnitt (201, 401) verbunden ist und mit dem ersten Abschnitt (201, 401) eine Lücke (203, 403) bildet, die sich in einer axialen Richtung (X) der ersten Sammelschiene (103, 303) erstreckt, wobei die Lücke (203, 403) dazu ausgelegt ist, die Verbindungsleiterdurchführung (106, 306) aufzunehmen;
**dadurch gekennzeichnet, dass** die Verbindungsleiterdurchführung (106) so ausgelegt ist, dass sie sich in axialer Richtung (X) bewegen kann, sodass die Verbindungsleiterdurchführung (106) während einer Installation oder Entfernung des Verbindungsleiters (105) in axialer Richtung (X) in die Lücke (203) bewegt werden kann, sodass der Verbindungsleiter für den Bediener zur Bedienung leicht zugänglich ist.

2. Sammelschienenverbindungsvorrichtung (100) nach Anspruch 1, wobei die Lücke (203) eine zylindrische Form aufweist und um die erste Sammelschiene (103) herum angeordnet ist und eine Länge der Lücke (203) mindestens das Dreifache der Dicke beträgt.

3. Sammelschienenverbindungsvorrichtung (100) nach Anspruch 1, ferner umfassend:
ein Druckelement (107, 307), das so konfiguriert ist, dass es die Verbindungsleiterdurchführung (106, 306, 506) auf die Sammelschienendurchführung (101) in einer Richtung drückt, die im Wesentlichen senkrecht zur axialen Richtung (X) ist, und den Verbindungsleiter (105) abdichtet.

4. Sammelschienenverbindungsvorrichtung (100, 300) nach Anspruch 1, wobei der Verbindungsleiter (105, 305) ein flexibler Verbindungsleiter ist.

5. Sammelschienenverbindungsvorrichtung (100, 300) nach Anspruch 1, ferner umfassend:
ein Befestigungselement (108, 308), das dazu ausgelegt ist, den Verbindungsleiter (105, 305) so zu befestigen, dass der Verbindungsleiter (105, 305) leitend mit der ersten Sammelschiene (103, 303) und der zweiten Sammelschiene (104, 304) verbunden ist

6. Sammelschienenverbindungsvorrichtung nach einem der Ansprüche 1 bis 5, wobei die zweite Sammelschienendurchführung den gleichen Aufbau wie die erste Sammelschienendurchführung aufweist.

## Revendications

1. Dispositif de connexion de barre omnibus (100, 300), comprenant :
une première traversée de barre omnibus (101, 301) apte à entourer de manière étanche au moins une partie d'une première barre omnibus (103, 303) ;
une deuxième traversée de barre omnibus (102, 302) apte à entourer de manière étanche au moins une partie d'une deuxième barre omnibus (104, 304) ;
un conducteur de connexion (105, 305) situé entre la première traversée de barre omnibus (101, 301) et la deuxième traversée de barre omnibus (102, 302) et connectant électriquement la première barre omnibus (103, 303) à la deuxième barre omnibus (104, 304) ; et
une traversée de conducteur de connexion (106, 306) conçue pour entourer de manière étanche le conducteur de connexion (105, 305), dans lequel
la traversée de conducteur de connexion (106) est une structure monobloc ; et dans lequel
au moins la première traversée de barre omnibus (101, 301) comprend :
une première partie (201, 401) apte à entourer de manière étanche au moins une partie de la première barre omnibus (103, 303) ; et
une deuxième partie (202, 402) connectée à la première partie (201, 401) et formant un interstice (203, 403) s'étendant dans une direction axiale (X) de la première barre omnibus (103, 303) avec la première partie (201, 401), l'interstice (203, 403) étant apte à recevoir la traversée de conducteur de connexion (106, 306) ;
**caractérisé en ce que** la traversée de conducteur de connexion (106) est apte à se déplacer dans la direction axiale (X) de sorte que la traversée de conducteur de connexion (106) peut être déplacée dans l'interstice (203) dans la direction axiale (X) lors de l'installation ou du retrait du conducteur de connexion (105), de sorte que le conducteur de connexion peut être facilement exposé pour les opérations effectuées par l'opérateur.

2. Dispositif de connexion de barre omnibus (100) selon la revendication 1, dans lequel l'interstice (203) présente une forme cylindrique et est agencé autour de la première barre omnibus (103), et une longueur de l'interstice (203) est au moins égale à trois fois l'épaisseur.

3. Dispositif de connexion de barre omnibus (100) selon la revendication 1, comprenant en outre :
un élément de pression (107, 307) configuré pour comprimer la traversée de conducteur de connexion (106, 306, 506) sur la traversée de barre omnibus (101) dans une direction sensiblement perpendiculaire à la direction axiale (X), et rendre étanche le conducteur de connexion (105).

4. Dispositif de connexion de barre omnibus (100, 300) selon la revendication 1, dans lequel le conducteur de connexion (105, 305) est un conducteur de connexion flexible.

5. Dispositif de connexion de barre omnibus (100, 300) selon la revendication 1, comprenant en outre :
un élément de fixation (108, 308) apte à fixer le conducteur de connexion (105, 305) de telle manière que le conducteur de connexion (105, 305) soit connecté de façon conductrice à la première barre omnibus (103, 303) et à la deuxième barre omnibus (104, 304).

6. Dispositif de connexion de barre omnibus selon l'une quelconque des revendications 1 à 5, dans lequel la deuxième traversée de barre omnibus présente la même structure que la première traversée de barre omnibus.
